# EUROPEAN PATENT APPLICATION

(11) **EP 4 557 499 A1**
(43) Date of publication of application: **21.05.2025**
(21) Application number: 22954403.6
(22) Date of filing: 10.08.2022
(51) Int. Cl.: H01M 50/538

(54) **ELECTRODE SHEET, ELECTRODE ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: XU, Hu, Ningde, Fujian 352100 (CN); NIU, Shaojun, Ningde, Fujian 352100 (CN); JIN, Haizu, Ningde, Fujian 352100 (CN); ZHAO, Fenggang, Ningde, Fujian 352100 (CN); HUANG, Siying, Ningde, Fujian 352100 (CN)
(74) Representative: Ran, Handong
(86) International application number: PCT/CN2022/111388
(87) International publication number: WO 2024/031427

(57) **Abstract**

Provided in the embodiments of the present application are an electrode sheet, an electrode assembly, a battery cell, a battery and an electric device. The electrode sheet comprises a current collector and an active material layer. The current collector comprises a coating region, a tab region, and a buffer region located between the coating region and the tab region, wherein the coating region, the tab region and the buffer region are arranged side by side in a first direction. The current collector comprises, in the tab region, a plurality of tab portions arranged side by side in a second direction, the first direction intersecting with the second direction. The coating region is coated with the active material layer. The current collector comprises a buffer portion in the buffer region, the buffer portion extending in the second direction and being connected to the plurality of tab portions, and the buffer portion being configured to absorb the bending stress of the plurality of tab portions. **In** the embodiments of the present application, the buffer region is arranged between the tab region and the coating region, thereby lowering the possibility of damage to roots of the tab portions, reducing or even eliminating the influence of stress generated by the tab portions on the coating region, reducing the risk of the active material layer falling off the coating region, and improving the yield of the electrode sheet.

## Description

### TECHNICAL FIELD

The present application relates to the technical field of batteries, and in particular, to an electrode plate, an electrode assembly, a battery cell, a battery, and an electrical apparatus.

### BACKGROUND

Battery cells are widely used in electronic devices such as mobile phones, laptops, battery vehicles, electric vehicles, electric planes, electric ships, electric toy cars, electric toy ships, electric toy planes and electric tools.

In existing battery technology, tabs in the battery cells are prone to deformation during a manufacturing process. How to ensure a current flow capacity while decreasing the defective rate of the tabs during the manufacturing process is a technical problem that needs to be solved urgently in the battery technology.

### SUMMARY OF THE INVENTION

The present application provides an electrode plate, an electrode assembly, a battery cell, a battery, and an electrical apparatus, which can increase the production yield of tabs.

In a first aspect, an embodiment of the present application provides an electrode plate, including a current collector and an active material layer. The current collector includes a coating region, a tab region and a buffer region located between the coating region and the tab region, wherein the coating region, the tab region and the buffer region are arranged side by side in a first direction, the current collector includes a plurality of tab portions arranged side by side in a second direction in the tab region, and the first direction intersects the second direction; the coating region is coated with the active material layer; wherein the current collector includes a buffer portion in the buffer region, the buffer portion extends in the second direction and is connected with the plurality of tab portions, and the buffer portion is configured to absorb bending stress of the plurality of tab portions.

In the above technical solution, by arranging the buffer region between the tab region and the coating region, stress generated by the tab portions in the tab region during subsequent bending is transmitted to the buffer region, and the buffer region bears the transmitted stress, thereby reducing the possibility of damage to roots of the tab portions, reducing or even eliminating the impact of the stress generated by the tab portions on the coating region, reducing the risk of falling-off of the active material layer in the coating region, and increasing the yield of the electrode plate.

In some implementations, a dimension of each tab portion in the first direction is H1, a dimension of the buffer portion in the first direction is H2, and H1 and H2 satisfy: H1≥H2.

In the above technical solution, the larger the dimension of the tab portions in the first direction, the more tab coverage is formed on a tab plane region after the tab portions are bent, which is beneficial to ensure a connection between the current collector and the shaped tabs and other components and to increase an overcurrent area of the tabs.

In some implementations, a dimension of each tab portion in the second direction is W1, a dimension of each tab portion in the first direction is H1, and H1 and W1 satisfy: 3W1≥H1≥0.5W1.

In the above technical solution, the larger the dimension of the tab portions in the second direction is, the more difficult it is to bend the tab portions. If the dimension of the tab portions in the second direction is too large, wrinkles are likely to appear on the tab portions after bending. The smaller the dimension of the tab portions in the second direction is, the more difficult it is to connect the tab portions with other components after shaping, and the smaller the overcurrent area of the tab portions is. In the above technical solution, the dimension of the tab portions in the second direction is limited to be 3W1≥H1≥0.5W1, so as to balance the bending difficulty and the overcurrent area of the tab portions.

In some implementations, each tab portion has a first edge and a second edge which are opposite to each other in the second direction, and the first edges in at least part of the tab portions are arranged to be inclined relative to the first direction.

In the above technical solution, the first edges in the tab portions are arranged to be inclined, so that the tab portions can have a certain inclining tendency. When bending in the tab region, the tab portions may be folded along an extension direction of the first edges, simplifying the difficulty of shaping the tab portions.

In some implementations, a first ray parallel to the first direction is formed in a direction from the tab region to the coating region, the first ray takes one end of the first edge away from the tab region as an endpoint, an included angle between the first edge and the first ray is α1, and α1 satisfies -75°≤α1≤75°. wherein assuming that the first edge is located within a 180° clockwise rotation range of the first ray, the included angle α1 between the first edge and the first ray is a positive included angle; and assuming that the first edge is located within a 180° counterclockwise rotation range of the first ray, the included angle α1 between the first edge and the first ray is a negative included angle.

In the above technical solution, the included angle between the first edge and the first ray is an inclination angle of the first edges. The larger the inclination angle of the first edges, the larger the inclination angle of the tab portions, and the lower the difficulty of shaping the tab portions. If the inclination angle of the first edges is too large, the length of the tab portions in the first direction will be reduced, thereby increasing the difficulty of connecting the tab portions with other components after bending and reducing the overcurrent area of the tab portions. In the above technical solution, the included angle between the first edge and the first ray is limited to be - 75°≤α1≤75°, so as to balance the shaping difficulty and overcurrent area of the tab portions.

In some implementations, the second edges in at least part of the tab portions are arranged to be inclined relative to the first direction.

In the above technical solution, the two edges of the tab portions in the second direction are both arranged to be inclined, so that when a plurality of electrode assemblies are integrated into the tabs, the tab portions can be nested with each other, thereby improving the overcurrent capacity.

In some implementations, in at least part of the tab portions, a first ray parallel to the first direction is formed in a direction from the tab region to the coating region, the first ray takes one end of the first edge away from the coating region as an endpoint, and an included angle between the first edge and the first ray is α1. A second ray parallel to the first direction is formed in the direction from the tab region to the coating region, the second ray takes one end of the second edge away from the coating region as an endpoint, and an included angle between the second edge and the second ray is α2. α1 and α2 satisfy: α1+α2=0°.

In the above technical solution, an isosceles trapezoidal structure can ensure the sufficient structural strength between the tab portions and the buffer region, increase the distance between adjacent tab portions, and facilitate the bending of the tab portions.

In some implementations, in at least part of the tab portions, a first ray parallel to the first direction is formed in a direction from the tab region to the coating region, the first ray takes one end of the first edge away from the coating region as an endpoint, and an included angle between the first edge and the first ray is α1. A second ray parallel to the first direction is formed in the direction from the tab region to the coating region, the second ray takes one end of the second edge away from the coating region as an endpoint, and an included angle between the second edge and the second ray is α2. At least part of α1 and α2 satisfy: α1/α2>0.

In the above technical solution, the first edges and the second edges have the same inclination direction, so that the tab portions as a whole tend to incline in the same direction, thus the plurality of tab portions can be smoothed in the same direction during a smoothing process, thereby reducing the possibility of wrinkles caused by multi-directional smoothing.

In some implementations, any tab portion does not extend beyond the coating region in the second direction.

In the above technical solution, the plurality of tab portions in the tab region are arranged side by side in the second direction, and the tab portions are connected with the buffer region and the coating region. In the current collector, the coating region occupies a larger part of the volume. During the winding process, the tab region needs to adapt to a winding direction and the number of winding turns of the coating region to simplify the winding process.

In some implementations, the plurality of tab portions have a first tab portion at one end in the second direction, the coating region has a third edge on one side close to the first tab portion in the second direction, and the third edge is spaced apart from the first tab portion in the second direction.

In the above technical solution, at least one end of the two ends of the current collector in the second direction is not provided with the tab portion on the side of the first direction, thereby avoiding damage to the tab portion during the manufacturing process.

In some implementations, the plurality of tab portions has a first tab portion at one end in the second direction, the coating region has a third edge on one side close to the first tab portion in the second direction, and in the first tab portion, the second edge is located on one side of the first tab portion close to the third edge; wherein in a direction away from the coating region, the second edge is arranged to be inclined relative to the first direction.

In the above technical solution, the inclined edge can minimize the damage to the first tab portion during the tab manufacturing process.

In some implementations, in at least part of the tab portions, the first edges are parallel to the second edges.

In the above technical solution, the first edges of part of the tab portions are parallel to the second edges, so that a cutting manner of the first edges of this part of tab portions during the manufacturing process can be applied to the cutting of the second edges, thereby simplifying the manufacturing flow of the tab portions.

In some implementations, the tab portion has a fourth edge on one side away from the coating region; the second edge is connected with the fourth edge through an arc-shaped connecting segment; or a chamfer is disposed at a junction of the second edge and the fourth edge.

In the above technical solution, the second edge is connected with the fourth edge through the arc-shaped connecting segment or the chamfer is disposed at the junction of the second edge and the fourth edge, so that the possibility of interference between the junction of the second edge and the fourth edge of the tab portion and the adj acent tab portion after the current collector is bent. The risk of cracking at the corners due to excessive pressure on the corners when the tab portions are bent. The weight of the electrode plate is further reduced.

In some implementations, adjacent tab portions are spaced apart in the second direction.

In the above technical solution, the weight of the electrode plate is reduced by arranging the tab portions at intervals.

In some implementations, each tab portion has a first edge and a second edge which are opposite to each other in the second direction, and the first edge is parallel to the second edge; and a distance between adjacent tab portions in the second direction is the same as the dimension of the tab portion in the second direction.

In the above technical solution, in the manufacturing process of the current collector, a plurality of current collectors are generally die-cut on a whole large blank current collector, and a region formed after the die-cutting is usually the tab region. In this embodiment, the distance between adjacent tab portions in the second direction is the same as the dimension of the tab portion in the second direction. Therefore, for the whole blank current collector, the die-cut region will become the tab region on the two current collectors, thereby reducing the using amount of the current collector, reducing the manufacturing cost of the current collector, and reducing the weight of the electrode plate.

In some implementations, a minimum distance between adjacent tab portions is D1, and D1satisfies: 0 mm≤D1≤1000 mm.

In the above technical solution, the minimum distance between adjacent tab portions may be zero. In other words, the edges of adjacent tab portions abut against each other. The larger the minimum distance between adjacent tab portions, the smaller the number of the tab portions in the current collector, and the lower the efficiency of current that can be transmitted after the tab portions are shaped and electrically connected with other components. The minimum distance D1 between the adjacent tab portions is limited to be 0 mm≤D1≤1000 mm. On the premise of ensuring the overcurrent efficiency of the tab portions, the minimum distance between adjacent tab portions is increased as much as possible to reduce the weight of the electrode plate.

In some implementations, the structural strength of the buffer portion is not less than the structural strength of other positions in the tab region.

In the above technical solution, by making the structural strength of the buffer portion no less than the structural strength of other positions of the tab region, the possibility of cracking between the buffer portion and the tab portions when the buffer portion is subjected to bending stress is reduced, the possibility of bending and wrinkling of the buffer portion itself is reduced, and the bending stress on the coating region is reduced.

In some implementations, the thickness of the buffer portion is greater than the thickness of other parts in the tab region; and/or the hardness of the buffer portion is greater than the hardness of other parts in the tab region.

In the above technical solution, the structural strength of the buffer portion is improved by increasing the thickness of the buffer portion or adding a material with a larger hardness parameter, which is very easy to achieve in the manufacturing process of the electrode plate without adding too many process links.

In some implementations, the electrode plate further includes a buffer layer, and the buffer layer is an inactive material layer coated on the buffer portion.

In the above technical solution, the structural strength of the buffer portion is further improved by arranging the buffer layer.

In a second aspect, some embodiments of the present application provide an electrode assembly, including a first electrode plate and a second electrode plate which are opposite in polarity, wherein the first electrode plate is the electrode plate according to any one of the multiple implementations of the first aspect.

In some implementations, the electrode assembly is of a cylindrical winding structure, and the first electrode plate and the second electrode plate are both electrode plates according to any one of the multiple implementations of the first aspect; a tab portion of the first electrode plate and a tab portion of the second electrode plate are located at the same end of the electrode assembly.

In the above technical solution, the tab portion of the first electrode plate and the tab portion of the second electrode plate are located at the same end of the electrode assembly, so that the tab portion of the first tab and the tab portion of the second electrode plate can be smoothed at the same time during the winding process or after winding.

In some implementations, the tab portion of the first electrode plate and the tab portion of the second electrode plate surround a winding shaft of the electrode assembly and are spaced apart in a circumferential direction.

In the above technical solution, the tab portions surround the winding shaft of the electrode assembly, so that the shaped tabs have no sharp edges and corners, thereby reducing the possibility of the shaped tabs being inserted into the interior of the electrode assembly.

In some implementation, the tab portion of the first electrode plate and the tab portion of the second electrode plate are symmetrically distributed on two sides of the winding shaft of the electrode assembly.

In the above technical solution, the symmetrical distribution can make the spatial arrangement of the tab portion 121 in the first electrode plate 300 and the tab portion 121 in the second electrode plate 400 more reasonable.

In some implementations, the electrode assembly is of the cylindrical winding structure, a distance between the tab portion in the first electrode plate and a central axis of the electrode assembly is R, and the width of the tab portion is W1; W1 and R in at least part of the tab portion satisfy: W1 ≤ πR.

In the above technical solution, the width of the tab portion in the second direction is less than or equal to half of a maximum circumference of the winding structure, which facilitates the bending of the tab portion after shaping and reduces the possibility of wrinkles after bending caused by excessive curvature of the tab.

In some implementations, the electrode assembly has a central hole at the winding center, the radius of the central hole is r, and W1and r in at least part of the tab portion satisfy: W1 ≤ πr.

In the above technical solution, the width of the tab portions in the second direction in a flattened state is less than or equal to half of the circumference of the central hole formed after winding, which is conducive to the bending of the tab portions, reduces the possibility of the tab portion close to the central hole being covered by the tab portion far from the central hole, and further improves the overcurrent capacity between the tab portions and other components.

In a third aspect, some embodiments of the present application provide a battery cell, including a shell and the electrode assembly according to any one of the implementations of the second aspect.

In a fourth aspect, some embodiments of the present application provide a battery, including the battery cell according to any one of the implementations of the third aspect.

In a fifth aspect, some embodiments of the present application provide an electrical apparatus, including the battery cell according to any one of the implementations of the third aspect, and the battery cell is used to provide electrical energy.

### BRIEF DESCRIPTION OF DRAWINGS

In order to illustrate the technical solutions of some embodiments of the present application more clearly, the following briefly introduces the drawings required in some embodiments of the present application. Obviously, the drawings described below are only some embodiments of the present application. For those of ordinary skill in the art, other drawings can also be obtained according to the drawings without any creative effort.
FIG.1 is a schematic structural diagram of a vehicle provided by some embodiments of the present application.
FIG.2 is a schematic exploded diagram of a battery provided by some embodiments of the present application.
FIG.3 is a schematic structural diagram of a battery module shown in FIG.2.
FIG.4 is a schematic structural exploded diagram of a battery cell provided by some embodiments of the present application.
FIG.5 is a schematic structural diagram of an electrode plate provided by some embodiments of the present application.
FIG.6 is a schematic diagram of a sectional structure taken along an A-A direction in FIG. 5.
FIG.7 is a structural enlarged view of a region Q shown in FIG. 5.
FIG.8 is a structural enlarged view of a region S shown in FIG. 5.
FIG.9 is a schematic structural diagram of a tab region of an electrode plate provided by some embodiments of the present application.
FIG.10 is a schematic structural diagram of a tab region of an electrode plate provided by some other embodiments of the present application.
FIG.11 is a schematic structural diagram of an electrode plate provided by some other embodiments of the present application.
FIG.12 is a schematic structural diagram of an electrode plate provided by some other embodiments of the present application.
FIG.13 is a schematic structural diagram of an electrode plate provided by some other embodiments of the present application.
FIG.14 is a schematic diagram of a sectional structure taken along a B-B direction in FIG. 13.
FIG.15 is a schematic structural diagram of a tab region of an electrode plate provided by some other embodiments of the present application.
FIG.16 is a schematic structural diagram of an electrode plate not subjected to die-cutting provided by some embodiments of the present application.
FIG.17 is a schematic structural diagram of an electrode plate subjected to die-cutting provided by some embodiments of the present application.
FIG.18 is a schematic structural diagram of an electrode assembly provided by some embodiments of the present application.
FIG.19 is a schematic structural diagram of an electrode assembly provided by some other embodiments of the present application.
FIG.20 is a schematic diagram of an electrode assembly provided by some embodiments of the present application from another perspective.

In the drawings, the figures are not drawn to the actual scale.

### Description of reference numerals:

1000, Vehicle; 2000, Battery; 2010, Box body; 2011, First box body portion; 2012, Second box body portion; 2013, Accommodating portion; 3000, Controller; 4000, Motor; 5000, Battery module;
1, Battery cell; 11, Shell; 111, Case; 112, End cover; 12, Electrode assembly;
10, Electrode plate;
100, Current collector; 110, coating region; 110a, Third edge; 120, Tab region; 121, Tab portion; 121a, First edge; 121b, Second edge; 121c, Fourth edge; 121d, Arc-shaped connecting segment and chamfer; 122, First tab portion; 130, Buffer region; 131, Buffer portion; 132, Buffer layer;
200, Active material layer;
300, First electrode plate;
400, Second electrode plate;
500, Winding shaft;
600, central hole;
X, First direction; Y, second direction.

### DETAILED DESCRIPTION

In order to make objectives, technical solutions and advantages of some embodiments of the present application clearer, the technical solutions in some embodiments of the present application will be described below clearly and completely with reference to drawings in some embodiments of the present application the described embodiments are part of the embodiments of the present application, but not all the embodiments. All other embodiments obtained by a person of ordinary skill in the art based on the embodiments of the present application without making creative efforts shall fall within the protection scope of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in some embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell, or the like, which is not limited by some embodiments of the present application. The battery cell may be in a cylindrical shape, a flat shape, a cuboid shape or another shape, which is also not limited by some embodiments of the present application.

The battery cell includes an electrode assembly and an electrolyte solution. The electrode assembly includes a positive electrode plate, a negative electrode plate and a spacer. The battery cell operates mainly relying on the movement of metal ions between the positive electrode plate and the negative electrode plate. The positive electrode plate includes a positive electrode current collector and a positive electrode active material layer, and the positive electrode active material layer is coated on a surface of the positive electrode current collector; and the positive electrode current collector includes a positive electrode coating region and a positive tab connected to the positive electrode coating region, the positive electrode coating region is coated with the positive electrode active material layer, and the positive tab is not coated with the positive electrode active material layer. Taking a lithium-ion battery cell as an example, the material of the positive electrode current collector may be aluminum, and the positive electrode active material layer includes a positive electrode active material, and the positive electrode active material may be lithium cobalt oxide, lithium iron phosphate, ternary lithium, lithium manganate, or the like. The negative electrode plate includes a negative electrode current collector and a negative electrode active material layer, and the negative electrode active material layer is coated on a surface of the negative electrode current collector; and the negative electrode current collector includes a negative electrode coating region and a negative tab connected to the negative electrode coating region, the negative electrode coating region is coated with the negative electrode active material layer, and the negative tab is not coated with the negative electrode active material layer. The material of the negative electrode current collector may be copper, and the negative electrode active material layer includes a negative electrode active material, and the negative electrode active material may be carbon, silicon, or the like. The material of the spacer may be polypropylene (PP), polyethylene (PE) or the like.

The battery cell further includes a shell, an electrode terminal and an adapter member. An accommodating cavity for accommodating the electrode assembly is formed inside the shell, and the electrode terminal is mounted on the shell. The shell may protect the electrode assembly from the outside to prevent external foreign matter from affecting the charging or discharging of the electrode assembly. The electrode terminal is used to be electrically connected with a tab of the electrode assembly to extract electrical energy generated by the electrode assembly. The adapter component is used to connect the electrode terminal and the tab, so as to make the electrode terminal be electrically connected with the tab.

In the related art, the electrode plate is wound to form the electrode assembly, and the battery formed by the wound electrode assembly has the advantages of low internal resistance and high energy density. The manufacturing manner of the wound battery usually involves coating one ends of the positive and negative electrode plates with active materials, and leaving the other ends as a blank part. During the winding process or after winding of the positive and negative electrode plates, the blank part is smoothed out to form the tab. After being shaped and bent, the tab is connected with the electrode terminal through the adapter member.

The inventor found that during the shaping process of the tab, the tab needs to withstand a certain pressure, while the structural strength of the electrode plate itself is the same, the tab only occupies a small part of the electrode plate, and the tab on the electrode plate is usually a plurality of separated tab, and the structural strength between the tabs and the electrode plate coating region is much smaller than that of the coating region. When the tabs are under pressure, the bending stress between the tabs and the electrode plate coating region is the largest, resulting in a certain degree of damage to the connection between the tabs and the electrode plate. At the same time, under the influence of pressure, in a region of the coating region close to the tabs, the active material in the coating region is prone to falling off, affecting the manufacturing yield of the battery cell.

In view of this, some embodiments of the present application provide an electrode plate, and the electrode plate includes: a current collector and an active material layer. The current collector includes a coating region, a tab region and a buffer region located between the coating region and the tab region, wherein the coating region, the tab region and the buffer region are arranged side by side in a first direction. The current collector includes a plurality of tab portions arranged side by side in a second direction in the tab region, and the first direction intersects the second direction. The coating region is coated with the active material layer. The current collector includes a buffer portion in the buffer region, the buffer portion extends in the second direction and is connected with the plurality of tab portions, and the buffer portion is constructed to absorb bending stress of the plurality of tab portions.

In some embodiments of the present application, by arranging the buffer region between the tab region and the coating region, stress generated by the tab portions in the tab region during subsequent bending is transmitted to the buffer region, and the buffer region bears the transmitted stress, thereby reducing the possibility of damage to roots of the tab portions, reducing or even eliminating the impact of the stress generated by the tab portions on the coating region, reducing the risk of falling-off of the active material layer in the coating region, and increasing the yield of the electrode plate.

The technical solutions described in some embodiments of the present application are applicable to the battery and the electrical apparatus using the battery.

The electrical apparatus may be a vehicle, a mobile phone, a portable device, a laptop, a ship, a spacecraft, an electric toy and an electric tool, and so on. The vehicle may be a fuel vehicle, a gas vehicle, or a new energy vehicle. The new energy vehicle may be a battery electric vehicle, a hybrid electric vehicle, an extended-range vehicle, or the like. The spacecraft includes an airplane, a rocket, a space shuttle, a spaceship, and the like. The electric toy includes fixed or mobile electric toys, such as a game machine, an electric vehicle toy, an electric ship toy, an electric airplane toy, and the like. The electric tool includes an electric metal cutting tool, an electric grinding tool, an electric assembling tool, an electric tool for railways, for example, an electric drill, an electric grinding machine, an electric wrench, an electric screwdriver, an electric hammer, an electric impact drill, a concrete vibrator, and an electric planer. Someembodiments of the present application do not make special restrictions on the above-mentioned electrical apparatus.

In the following embodiments, for the convenience of description, the electrical apparatus being a vehicle is taken as an example for illustration.

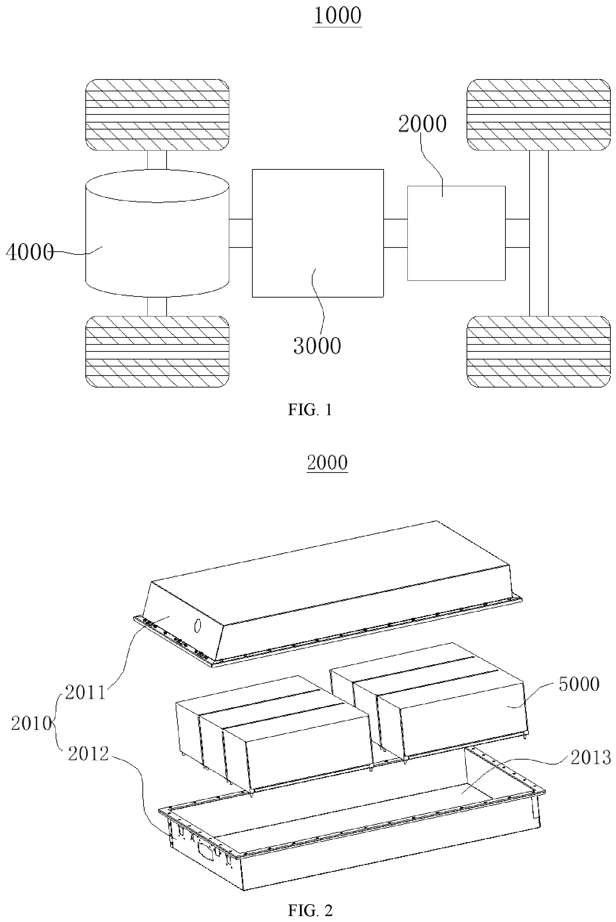

FIG.1 is a schematic structural diagram of a vehicle provided by some embodiments of the present application.

As shown in FIG.1, the vehicle1000is internally provided with a battery2000. The battery2000may be arranged at a bottom or a head or a tail of the vehicle 1000. The battery2000may be used as a power supply for the vehicle1000, for example, the battery2000may be used as an operating power source for the vehicle1000.

The vehicle1000may further include a controller3000and a motor4000. The controller3000is used to control the battery2000to supply power to the motor4000, for example, for power requirements of the vehicle1000during starting, navigation and driving.

In some embodiments of the present application, the battery 2000 may not only serve as the operating power source of the vehicle 1000, but also serve as a driving power source of the vehicle 1000 to replace or partially replace fuel or natural gas to provide driving power for the vehicle 1000.

FIG.2 is a schematic exploded diagram of a battery provided by some embodiments of the present application.

As shown in FIG.2, the battery2000includes a box body2010and a battery cell 1 (not shown in the figure), and the battery cell 1 is accommodated within the box body2010.

The box body 2010 is used to accommodate the battery cell 1, and the box body 2010 may be of various structures. In some embodiments, the box body 2010 may include a first box body portion2011and a second box body portion2012. The first box body portion 2011and the second box body portion 2012 are covered by each other, and the first box body portion 2011and the second box body portion 2012 together define an accommodating portion 2013 for accommodating the battery cell 1. The second box body portion 2012 may be of a hollow structure with one end open, and the first box body portion 2011 may be of a plate-like structure. The first box body portion 2011 covers an open side of the second box body portion 2012 to form the box body 2010 having the accommodating portion 2013. The first box body portion 2011and the second box body portion 2012 may alternatively both be of a hollow structure with one side open, and the open side of the first box body portion 2011 covers the open side of the second box body portion 2012 to form the box 2010 having the accommodating portion 2013. Of course, the first box body portion 2011and the second box body portion 2012 may be in various shapes, such as a cylinder or a cuboid.

In order to improve the sealing performance after the first box body portion 2011 and the second box body portion 2012 are connected to each other, a sealing member, such as a sealant and a sealing ring, may be further arranged between the first box body portion 2011 and the second box body portion 2012.

Assuming that the first box body portion 2011 covers atop of the second box body portion 2012, the first box body portion 2011 may also be referred to as an upper box cover, and the second box body portion 2012 may also be referred to as a lower box body.

The battery 2000 may include one or a plurality of battery cells 1. If there are the plurality of battery cells 1, the plurality of battery cells1may be connected in series, in parallel or in series-parallel. The series-parallel connection means that some of the plurality of battery cells 1 are connected in series and some are connected in parallel. The plurality of battery cells 1 can be directly connected together in series or in parallel or in series-parallel, and then the whole composed of the plurality of battery cells 1 are accommodated in the box body 2010; and of course, the plurality of battery cells 1 can be connected in series or in parallel or in series-parallel to form a battery module 5000 first, and then the plurality of battery modules can be connected in series or in parallel or in series-parallel to form a whole, and accommodated in the box body 2010.

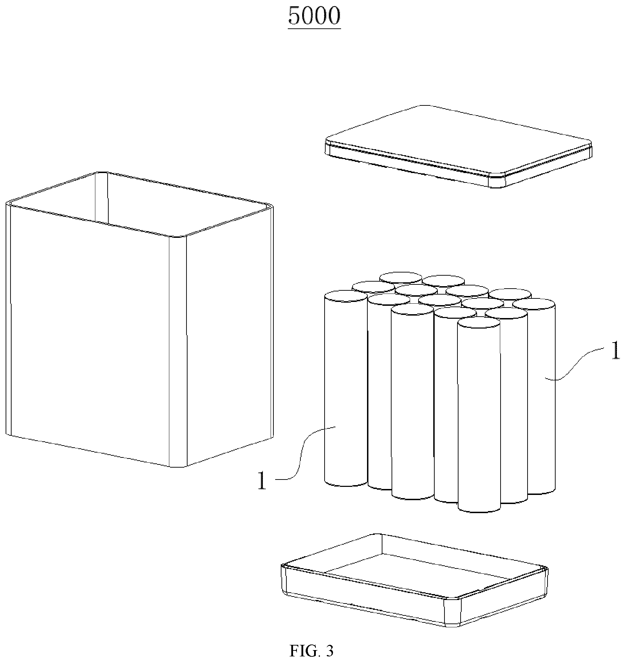

FIG.3 is a schematic structural diagram of a battery module shown in FIG.2. As shown in FIG.3, in some embodiments, the plurality of battery cells 1 are provided, and the plurality of battery cells 1 are connected in series, in parallel or in series-parallel first to form the battery module 5000. Then the plurality of battery modules 5000 are connected in series, in parallel or in series-parallel to form a whole and accommodated in the box body 2010.

The plurality of battery cells 1 in the battery module may be electrically connected via a bus component, so as to realize parallel connection, series connection or series-parallel connection of the plurality of battery cells1in the battery module.

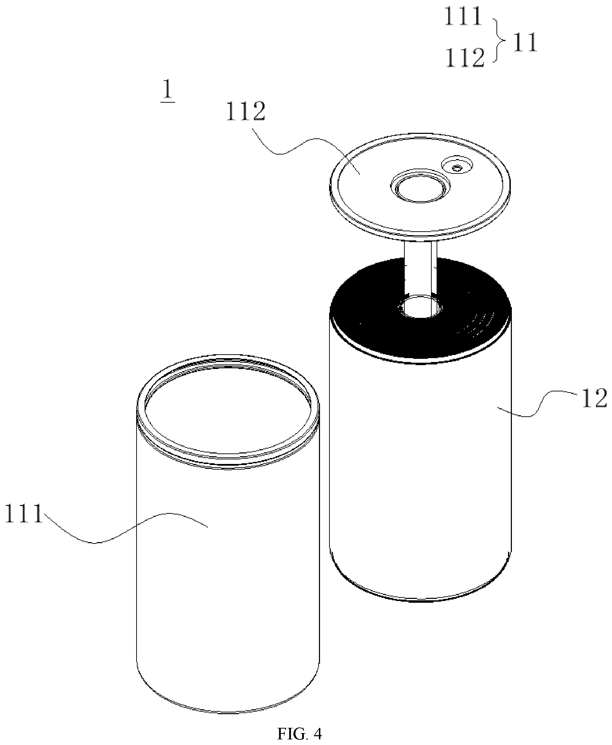

FIG.4 is a schematic structural exploded diagram of a battery cell 1provided by some embodiments of the present application. As shown in FIG. 4, the battery cell 1 includes a shell 11 and an electrode assembly 12, and the electrode assembly 12 is accommodated in the shell 11.

The electrode assembly 12 is a core component of the battery cell 1 to realize the charge and discharge functions, which includes a positive electrode plate, a negative electrode plate and a spacer. The polarities of the positive electrode plate and the negative electrode plate are opposite, and the spacer is used to insulate and isolate the positive electrode plate and the negative electrode plate. The electrode assembly 12 works mainly relying on movement of metal ions between the positive electrode plate and the negative electrode plate.

The shell 11 is of a hollow structure, and an accommodating cavity is formed inside the shell for accommodating the electrode assembly 12 and the electrolyte solution. The shell 11 may have various shapes, such as a cylinder or a cuboid. The shape of the shell 11 may be determined according to the specific shape of the electrode assembly 12. For example, if the electrode assembly 12 is of a cylindrical structure, the electrode assembly may be selected as a cylindrical shell; and if the electrode assembly 12 is of a cuboid structure, the electrode assembly may be selected as a cuboid shell.

In some embodiments, the shell 11 includes a case 111 and an end cover 112.

The end cover 112 and the case 111 are in sealing connection to form a sealed space for accommodating the electrode assembly 12 and the electrolyte solution. In some examples, one end of the case 111 has an opening, and one end cover 112 is arranged to cover an opening of the case 111. In some other examples, two opposite ends of the case 111 have openings, two end covers112 are arranged, and the two end covers 112 cover the two openings of the case 111 respectively.

Without limitation, the shape of the end cover 112 can be adapted to the shape of the case 111 to fit the case 111. Optionally, the end cover 112 may be made of a material (e.g., an aluminum alloy) with a certain hardness and strength, accordingly, the end cover 112 is not prone to deformation when being subjected to extrusion and collision, such that the battery cell 1 can have higher structural strength, and the safety performance can also be improved.

The case 111 may be in various shapes and dimensions, such as a cuboid, a cylinder, and a hexagonal prism. Specifically, the shape of the case 111 may be determined according to the specific shape and dimension of the electrode assembly 12. The case111may also be made of a variety of materials, such as copper, iron, aluminum, stainless steel, and aluminum alloy, which is not particularly limited in some embodiments of the present application.

In some embodiments, a functional component such as an electrode terminal may be arranged on the end cover 112. The electrode terminal can be used for being electrically connected with the electrode assembly12for outputting or inputting electrical energy from or into the battery cell 1.

The specific structure of the electrode plate is described in detail below in conjunction with the drawings. The electrode plate 10 may be a positive electrode plate, or may be a negative electrode plate.

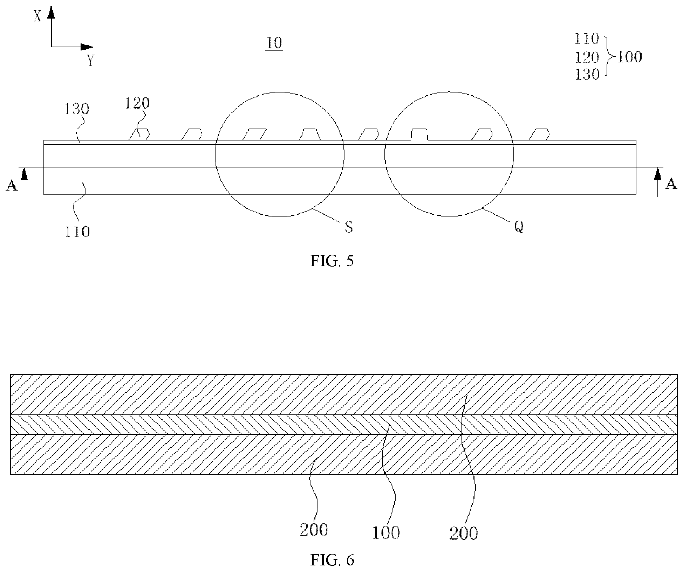

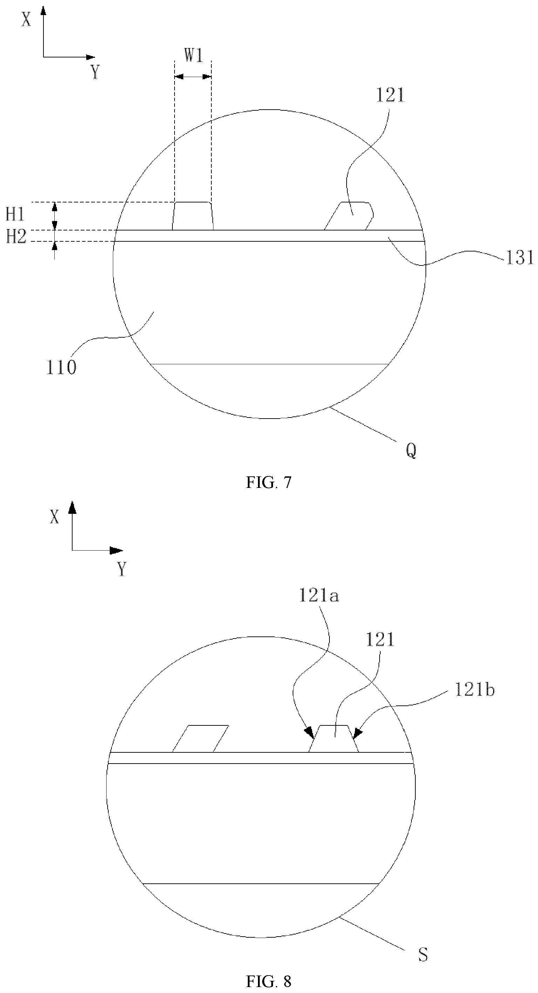

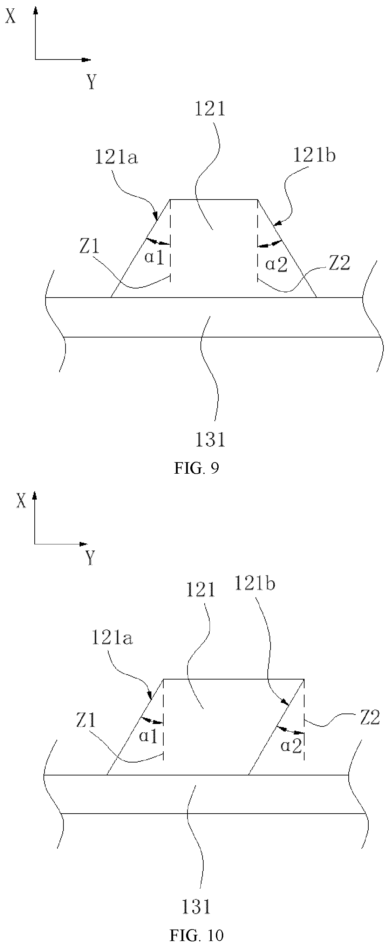

FIG.5 is a schematic structural diagram of an electrode plate provided by some embodiments of the present application. FIG.6 is a schematic diagram of a sectional structure taken along an A-A direction in FIG. 5. FIG.7 is a structural enlarged view of a region Q shown in FIG. 5. FIG.8 is a structural enlarged view of a region S shown in FIG. 5. FIG.9 is a schematic structural diagram of a tab region of an electrode plate provided by some embodiments of the present application. FIG.10 is a schematic structural diagram of a tab region 120 of an electrode plate 10provided by some other embodiments of the present application.

As shown in FIG. 5 to FIG. 10, some embodiments of the present application provide an electrode plate 10. The electrode plate10 includes a current collector 100 and an active material layer 200. The current collector 100 includes a coating region 110, a tab region 120 and a buffer region 130 located between the coating region 110 and the tab region 120, wherein the coating region, the tab region and the buffer region are arranged side by side in a first direction X. The current collector 100 includes a plurality of tab portions 121 arranged side by side in a second direction Yin the tab region 120, and the first direction X intersects the second direction Y. The coating region 110 is coated with the active material layer 200. The current collector 100 includes a buffer portion 131 in the buffer region 130, the buffer portion 131 extends in the second direction Y and is connected with the plurality of tab portions 121, and the buffer portion 131 is constructed to absorb bending stress of the plurality of tab portions 121.

The coating region 110, the buffer region 130 and the tab region 120 in the current collector 100 are arranged side by side in the first direction X. The tab region 120 and the buffer region 130 may be arranged on one side of the coating region 110, or both the tab region 120and the buffer region 130 may be arranged on two opposite sides of the coating region 110. The active material layer 200 is coated in the coating region 110, and no active material layer 200 exists in the tab region 120.

The plurality of tab portions 121 in the tab region 120 are arranged side by side in the second direction Y. The plurality of tab portions 121 are of a mutually independent structure in the second direction Y. In some examples, adjacent edges of the two adjacent tab portions 121abut against each other. In some other examples, there is a certain gap between the adjacent edges of the two adjacent tab portions 121.

In some examples, general shapes of a part or all of the tab portions 121 in the tab region 120 are similar. Exemplarily, inclination directions of the tab portions 121 are similar or the shapes of the tab portions 121 are similar polygons. During the shaping process of the tab portions 121, the tab portions 121 are shaped by spiral stacking, so that during rotational shaping, the tab portions 121 can be smoothed or kneaded in the same direction, making the shaping easier. It should be noted that the tab portions 121 form a tab plane region after being bent, and the tab plane region needs to be electrically connected with other components in the battery cell 1. The larger the area of electrical connection between the tab plane region and other components, the stronger the overcurrent capacity of the tabs.

The buffer region 130 is used to connect the tab region 120 with the coating region 110. The length of the buffer region 130 in the second direction Y needs to be greater than or equal to the length of the tab region 120 in the second direction Y. Furthermore, in order to reduce excessive impact on the current collector100when it is bent, the length of the buffer region 130 in the second direction Y is less than or equal to the length of the coating region 110 in the second direction Y. In some examples, the buffer portion 131 is an integrated design. In some other examples, the plurality of buffer portions 131 are provided, and the buffer portions 131 are arranged in a one-to-one correspondence with the tab portions 121.

It is understandable that the buffer region 130 serves as a middle region connecting the tab region 120 with the coating region 110, and the dimension of the buffer region 130 should be reduced as much as possible under the premise that the buffer region 130 can withstand a certain bending stress.

Optionally, the active material layers 200 are arranged on surfaces of two sides of the coating region 110.

In some embodiments of the present application, by arranging the buffer region 130 between the tab region 120 and the coating region 110, stress generated by the tab portions 121 in the tab region 120 during subsequent bending is transmitted to the buffer region 130, and the buffer region 130 bears the transmitted stress, thereby reducing the possibility of damage to roots of the tab portions 121, reducing or even eliminating the impact of the stress generated by the tab portions 121 on the coating region 110, reducing the risk of falling-off of the active material layer 200 in the coating region 110, and increasing the yield of the electrode plate 10.

In some embodiments, please refer to FIG. 7, a dimension of each tab portion 121 in the first direction X is H1, a dimension of the buffer portion 131 in the first direction X is H2, and H1 and H2 satisfy: H1≥H2.

In some examples of implementations, a value of H1 is in a range from 3 mm to 9 mm, and a value of H2 is in a range from 1 mm to 2 mm.

In this embodiment, the larger the dimension of the tab portions 121 in the first direction X, the more tab coverage is formed on a tab plane region after the tab portions 121 are bent, which is beneficial to ensure a connection between the current collector 100 and the shaped tabs and other components and to increase an overcurrent area of the tabs.

In some embodiments, please continue to refer to FIG. 6, a dimension of each tab portion 121 in the second direction Y is W1, a dimension of each tab portion 121 in the first direction X is H1, and H1 and W1 satisfy: 3W1≥H1≥0.5W1.

In some examples of implementations, a value of W1 is in a range from 3 mm to 6 mm.

In this embodiment, the larger the dimension of the tab portions 121 in the second direction Y is, the more difficult it is to bend the tab portions 121. If the dimension of the tab portions 121 in the second direction Y is too large, wrinkles are likely to appear on the tab portions 121 after bending. The smaller the dimension of the tab portions 121 in the second direction Y is, the more difficult it is to connect the tab portions 121 with other components after shaping, and the smaller the overcurrent area of the tab portion 121 is. The dimension of the tab portions 121 in the second direction Y is limited to be 3W1≥H1≥0.5W1, so as to balance the bending difficulty and the overcurrent area of the tab portions 121.

In some embodiments, please refer to FIG. 8, each tab portion 121 has a first edge 121a and a second edge 121b which are opposite to each other in the second direction Y, and the first edges 121a in at least part of the tab portions 121 are arranged to be inclined relative to the first direction X.

The first edge 121a is arranged to be inclined relative to the first direction X, that is, an extension direction of the first edge 121a intersects the first direction X. In this embodiment, please refer to FIG. 8, the first edges 121a in the tab portions 121 are arranged to be inclined, so that the tab portions 121 can have a certain inclining tendency. When bending in the tab region 120, the tab portions 121 may be folded along the extension direction of the first edges 121a, simplifying the difficulty of shaping the tab portions 121.

It should be noted that some embodiments of the present application do not limit a relationship between the second edges 121b and the first direction X. The second edges 121b can be arranged parallel to the first direction X, or can be arranged to be inclined relative to the first direction X.

In some embodiments, please refer to FIG.5 and FIG. 9 together, a first ray Z1 parallel to the first direction X is formed in a direction from the tab region 120 to the coating region 110, the first ray Z1 takes one end of the first edge 121a away from the coating region 110 as an endpoint, an included angle between the first edge 121a and the first ray Z1 is α1, and α1 satisfies - 75°≤α1≤75°.
wherein assuming that the first edges 121a are located within a 180° clockwise rotation range of the first ray Z1, the included angleα1 between the first edges 121a and the first ray Z1 is a positive included angle; and assuming that the first edges 121a are located within a 180° counterclockwise rotation range of the first ray Z1, the included angle α1 between the first edges 121a and the first ray Z1 is a negative included angle.

In this embodiment, FIG.9 is taken as an example for specific description. In FIG. 9, the first edges 121a are all located on a left side of the first ray Z1, and the first edges 121a are located within the 180° counterclockwise rotation range of the first ray Z1 around its endpoint, so the included angle α1 between the first edges 121a and the first ray Z1 is the negative included angle. Exemplarily, in FIG. 9, α1=-30°.

It should be noted that, since the first edge 121a is arranged to be inclined relative to the first direction X, and the first ray Z1 is parallel to the first direction X, the included angle α1 between the first edge 121a and the first ray Z1 cannot be zero.

In some examples of implementations, the angle of α1satisfies α1 ∈ [-30°, 30°].

In some examples of implementations, the included angle between the first edges 121a and the first direction X is an inclination angle of the first edges 121a. The larger the inclination angle of the first edges 121a, the larger the inclination angle of the tab portions 121, and the lower the difficulty of shaping the tab portions 121. If the inclination angle of the first edges 121a is too large, the length of the tab portions 121 in the first direction X will be reduced, thereby increasing the difficulty of connecting the tab portions 121 with other components after bending and reducing the overcurrent area of the tab portions 121. In the above technical solution, the included angle between the first edges 121a and the first direction X is limited to be -75°≤α1≤75°, so as to balance the shaping difficulty and overcurrent area of the tab portions 121.

In some embodiments, as shown in FIG. 9, the second edges 121b in at least part of the tab portions 121 are arranged to be inclined relative to the first direction X.

In some examples, the first edges 121a and the second edges 121b have the same inclination direction. In some other examples, the first edges 121a and the second edges 121b have the opposite inclination direction.

Exemplarily, a second ray Z2 parallel to the first direction X is formed in a direction from the tab region 120 to the coating region 110, the second ray Z2 takes one end of the second edge 121b away from the coating region 110 as an endpoint, and an included angle between the second edges 121b and the second ray Z2 is α2.

Similar to the included angle α1, assuming that the second edges 121b are located within the 180° clockwise rotation range of the second ray Z2, the included angle α2 between the second edges 121b and the second ray Z2 is a positive included angle; and assuming that the second edges 121b are located within the 180° counterclockwise rotation range of the second ray Z2, the included angle α2 between the second edges 121b and the second ray Z2 is a negative included angle.

In this embodiment, FIG. 9 is taken as an example for specific description. In FIG. 9, the second edges 121b are all located on a right side of the second ray Z2, and the second edges 121b are located within the 180° clockwise rotation range of the second ray Z2 around its endpoint, so the angle α2 between the second edges 121b and the second ray Z2 is a positive included angle.

It should be noted that, since the second edges 121bare arranged to be inclined relative to the first direction X, and the second ray Z2 is parallel to the first direction X, the included angle α2 between the second edges 121b and the second ray Z2 cannot be zero.

In this embodiment, the two edges of the tab portions 121 in the second direction Y are both arranged to be inclined, the two edges of the tab portions 121 in the second direction Y are both arranged to be inclined, so that when a plurality of electrode assemblies 12 are integrated into the tabs, the tab portions 121 can be nested with each other, thereby improving the overcurrent capacity.

In some embodiments, as shown in FIG. 9, α1 and α2 satisfy: α1+α2=0°. That is, the first edges 121a and the second edges 121b have different inclination directions.

Specifically, when the included angle α1 is a positive angle, the included angle α2 is a negative angle of the same angle value. Exemplarily, when the value of α1 is 30°, the value of α2 is -30°; when the value of α1 is 45°, the value of α2 is -45°; and when the value of α1 is 50°, the value of α2 is -50°.

This ensures that a projection of the tab portions 121 in the thickness direction is in a shape of an isosceles trapezoid. In this embodiment, an isosceles trapezoidal structure can make the structural strength between the tab portions 121 and the buffer region 130 be sufficient, increase the distance between adjacent tab portions 121, and facilitate the bending of the tab portions 121.

In some embodiments, please refer to FIG. 5 and FIG. 10 together, at least part of α1 and α2 satisfy: α1/α2>0. That is, the first edges 121a and the second edges 121b have the same inclination direction.

Specifically, when the included angle α1 is the positive angle, α2 is also the positive angle. Exemplarily, when the value of α1 is 30°, the value of α2 is 30°; when the value of α1 is 45°, the value of α2 is 40°; and when the value of α1 is 50°, the value of α2 is 60°. When the included angle α1 is the negative angle, α2 is also the negative angle. Exemplarily, when the value of α1 is -30°, the value of α2 is -30°; when the value of α1 is -45°, the value of α2 is -40°; and when the value of α1 is -50°, the value of α2 is -60°.

The tab portions 121 as a whole tend to incline in the same direction, thus the plurality of tab portions 121 can be smoothed in the same direction during a smoothing process, thereby reducing the possibility of wrinkles caused by multi-directional smoothing. In some examples of implementation, the inclination direction of the tab portions 121 is the same as a winding direction of the current collector 100, so that the tab portions 121 can be smoothed along the winding direction during the winding process or after winding, further reducing the stress on the buffer region 130 when the tab portions 121 are smoothed.

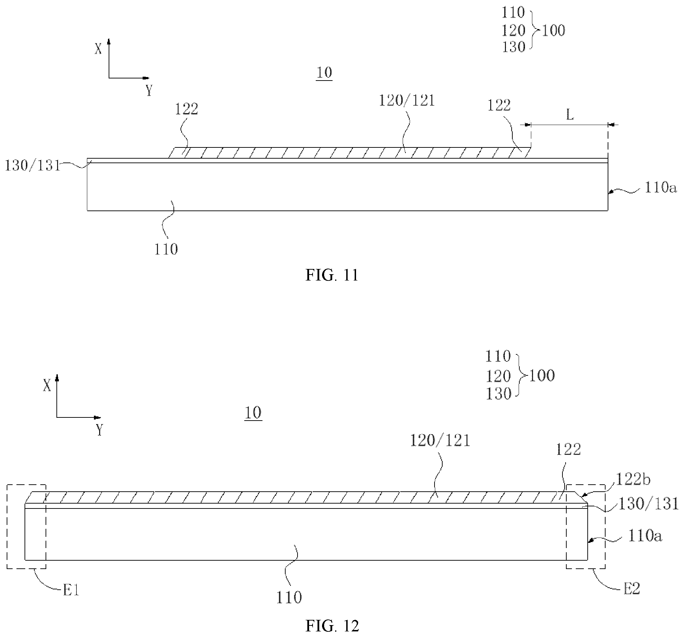

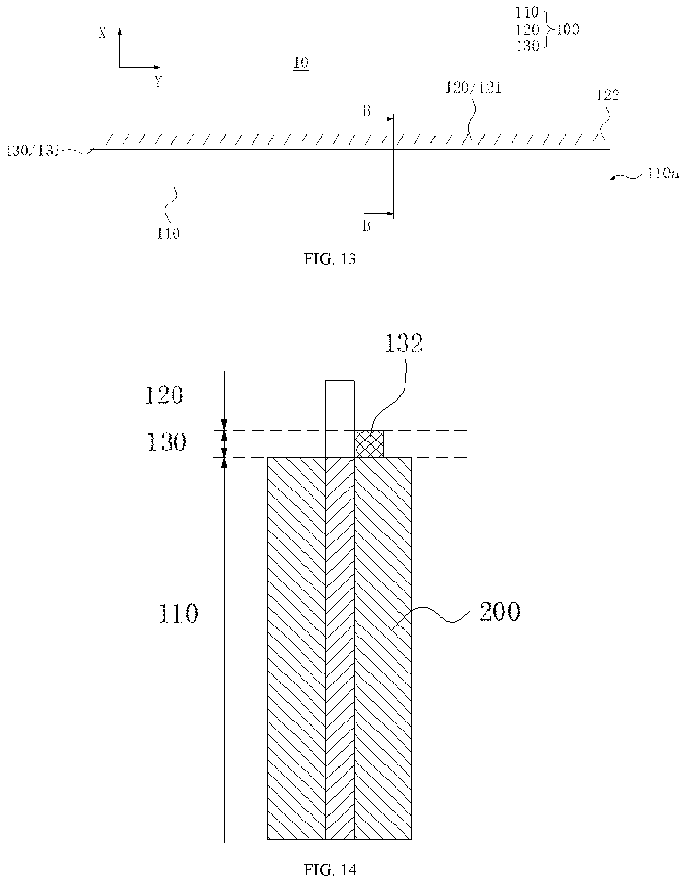

FIG.11 is a schematic structural diagram of an electrode plate provided by some other embodiments of the present application. FIG.12 is a schematic structural diagram of an electrode plate provided by some other embodiments of the present application. FIG.13 is a schematic structural diagram of an electrode plate provided by some other embodiments of the present application.

In some embodiments, as shown in FIG. 11 to FIG. 13, any tab portion 121 does not exceed the coating region 110 in the second direction Y.

The connection position between any tab portion 121 and the buffer region 130 does not exceed the coating region 110 in the second direction Y, the first edge 121a or the second edge 121b of any tab portion 121 does not exceed the coating region 110 in the second direction Y, and one side of any tab portion 121 deviating away from the buffer region 130 does not exceed the coating region 110 in the second direction Y.

In this embodiment, the plurality of tab portions 121 in the tab region 120 are arranged side by side in the second direction Y, and the tab portions 121 are connected with the buffer region 130 and the coating region110. In the current collector 100, the coating region 110 occupies a larger part of the volume. During the winding process, the tab region 120 needs to adapt to a winding direction and the number of winding turns of the coating region 110 to simplify the winding process.

In some embodiments, please refer to FIG.11 to FIG. 13, the plurality of tab portions 121 have a first tab portion 122 at one end in the second direction Y, the coating region 110 has a third edge 110a on one side close to the first tab portion 122 in the second direction Y, and the third edge 110 is spaced apart from the first tab portion 122 in the second direction Y.

In the tab portion 120, the whole formed by the plurality of tab portions 121 has two ends in the second direction Y, and the two ends have the first tab portions 122. It should be noted that shapes of the first tab portions 122 at the two ends may be completely the same. The shapes of the first tab portions 122 at the two ends may also be partially the same. Exemplarily, inclination directions of first edges 121a or second edges 121b of the first tab portions 122 at the two ends are the same, or inclination angles of the first edges 121a or the second edges 121b of the first tab portions 122 at the two ends are the same, or dimensions of the first tab portions 122 at the two ends in the first direction X are the same, or dimensions of the first tab portions 122 at the two ends in the second direction Y are the same. The shapes of the first tab portions 122 at the two ends may also be completely different.

Accordingly, the whole formed by the coating region 110 has two ends in the second direction Y, and shapes of third edges 110a at the two ends may be completely the same. The shapes of the third edges 110a at the two ends may also be partially the same. Exemplarily, dimensions of the third edges 110a at the two ends in the first direction X are the same, or the third edges 110a at the two ends have the same inclination direction with the first direction X, or the third edges 110a at the two ends have the same included angle with the first direction X. The shapes of the third edges 110a at the two ends may also be completely different.

As shown in FIG.11, at least one first tab portion 122 is spaced apart from the third edge 110a in the second direction Y. In other words, at least one of the two ends of the current collector 100 in the second direction Y is not provided with the tab portion 121 on the side position in the first direction X. Optionally, a distance between the third edge 110a corresponding to one end of the current collector 100 not provided with the tab portion 121 and the first tab portion 122 in the second direction Y is L, and L satisfies 10 mm≤L≤1500 mm. Preferably, L satisfies300 mm≤L≤600 mm.

As a connection region between the tab region 120 and the coating region 110, two ends of the buffer region 130 do not exceed the third edge 110a in the second direction Y, thereby simplifying the winding process of the current collector 100.

During the manufacturing process of the tab portions 121, there are a feeding position E1 and a finishing position E2. As shown in FIG. 12, the feeding position E1 refers to one end of the current collector 100 in the second direction Y, and the finishing position E2 refers to the other end of the current collector 100 in the second direction Y. The feeding position E1 requires the coating region 110 to enter first before the entire current collector 100 can be clamped. Similarly, the finishing position E2 also requires the coating region 110 to leave last to avoid damaging the tab portions 121. In this embodiment, at least one end of the two ends of the current collector 100 in the second direction Y is not provided with the tab portion 121 on the side of the first direction X, thereby avoiding damage to the tab portion 121 during the manufacturing process.

In some embodiments, as shown in FIG.12, the plurality of tab portions 121 has a first tab portion 122 at one end in the second direction Y, the coating region 110 has a third edge 110a on one side close to the first tab portion 122 in the second direction Y, and in the first tab portion 122, the second edge 121b is located on one side of the first tab portion 122 close to the third edge 110a; wherein in a direction away from the coating region 110, the second edge 121b is arranged to be inclined relative to the first direction X.

In this embodiment, referring to FIG. 12, the second edges 121b of the first tab portion 122 are arranged to be inclined relative to the first direction X. Since the first tab portion 122 does not exceed the coating region 110 in the second direction Y, the inclination direction of the second edges 121b can only be inclined toward and close to the center of the tab region 120. When the current collector 100 enters the feeding position E1 or leaves the finishing position E2, the current collector 100 needs to move in a guide rail of the processing equipment. The inclined arrangement of the edge of the first tab portion 122 can play a certain degree of guiding role, thereby reducing the damage of the guide rail to the first tab portion 122.

In some embodiments, as shown in FIG.13, in at least part of the tab portions 121, the first edges 121a are parallel to the second edges 121b.

In some examples, referring to FIG. 10 and FIG. 13, the first edges 121a of part of the tab portions 121 are parallel to the second edges 121b. Exemplarily, the included angle α1 between the first edges 121a and the first direction X is equal to an included angle α2 between the second edges 121b and the first direction X. In some other examples, referring to FIG. 10 and FIG. 11, the first edges 121a of all the tab portions 121 of the tab region 120 are parallel to the second edges 121b.

Optionally, the shape of each tab portion 121 is a parallelogram.

In some examples, referring to FIG. 10 and FIG. 11, the first edges 121a of the first tab portion 122 are parallel to the second edges 121b. In some other examples, referring to FIG. 10 and FIG. 12, the first edges 121b of the first tab portion 122 are parallel to the third edges 110a of the coating region 110.

In this embodiment, the first edges 121a of part of the tab portions 121 are parallel to the second edges 121b, so that a cutting manner of the first edges 121a of this part of tab portions 121 during the manufacturing process can be applied to the cutting of the second edges 121b, thereby simplifying the manufacturing flow of the tab portions 121.

FIG.14 is a schematic diagram of a sectional structure taken along a B-B direction in FIG. 13.

In some embodiments, the structural strength of the buffer portion 131 is not less than the structural strength at other positions within the tab region 120.

In the present application, the structural strength refers to a strength to withstand bending stress or the smoothing or flattening force during the shaping process.

In this embodiment, by making the structural strength of the buffer portion 131 no less than the structural strength of other positions of the tab region 120, the possibility of cracking between the buffer portion 131 and the tab portions 121 when the buffer portion 131 is subjected to bending stress is reduced, the possibility of bending and wrinkling of the buffer portion 131 itself is reduced, and the bending stress on the coating region110 is reduced.

In some embodiments, the thickness of the buffer portion 131 is greater than the thickness of other parts in the tab region120; and/or the hardness of the buffer portion 131 is greater than the hardness of other parts in the tab region 120.

Optionally, the structural strength of the buffer portion 131 is improved by increasing the thickness of the buffer portion 131to make the thickness of the buffer portion 131 be greater than the thickness of other parts in the tab region 120. In some examples, the overall thickness of the buffer portion 131 is increased. In some other examples, the thickness of a local region in the buffer portion 131 is increased. Exemplarily, the thickness of a region of the buffer portion 131 close to the tab portion 121 is increased. Alternatively, the thickness of a region of the buffer portion 131 close to the coating portion 110 is increased.

Optionally, the structural strength of the buffer portion 131 is increased by adding a material with a larger hardness parameter to the buffer portion 131. In some examples, the material with the larger hardness parameter is added to the whole region of the buffer portion 131. In some other examples, the material with the larger hardness parameter is added to the local region in the buffer portion 131. Exemplarily, the material with the larger hardness parameter is added to the region of the buffer portion 131 close to the tab portion 121. Alternatively, the material with the larger hardness parameter is added to the region of the buffer portion 131 close to the coating region 110. Exemplarily, the material with the larger hardness parameter may be metal such as copper, silicon, magnesium, zinc, and manganese. It should be noted that the increase of the hardness of the buffer portion 131 may be achieved by not only changing the material of the buffer portion 131, that is, adding the material with the larger hardness parameter into the buffer portion 131, but also the hardness may be changed by a process method. Specifically, surface properties of the buffer portion 131 may be changed by annealing, electroplating, oxidation, and other means, so that the buffer portion 131 has the stronger hardness.

In this embodiment, the structural strength of the buffer portion 131 is improved by increasing the thickness of the buffer portion 131 or adding the material with the larger hardness parameter, which is very easy to achieve in the manufacturing process of the electrode plate 10 without adding too many process links.

In some embodiments, as shown in FIG.14, the electrode plate 10 further includes a buffer layer 132, and the buffer layer 132 is an inactive material layer 200 coated on the buffer portion 131.

The buffer layer 132 has the characteristics of good bending stress absorption and high hardness, and is used to further improve the structural strength of the buffer portion 131.

In some examples, the material and thickness of the buffer portion 131 are the same as the thickness of the tab portion 121, and the buffer portion 131 is coated with the buffer layer 132. During the manufacturing process of the current collector 100, there is no need to perform special treatment on the buffer portion 131, only after the current collector 100 is die-cut, the buffer portion 131 is coated with the buffer layer 132, thereby simplifying the process difficulty of the current collector 100.

In this embodiment, the structural strength of the buffer portion 131 is further improved by arranging the buffer layer 132.

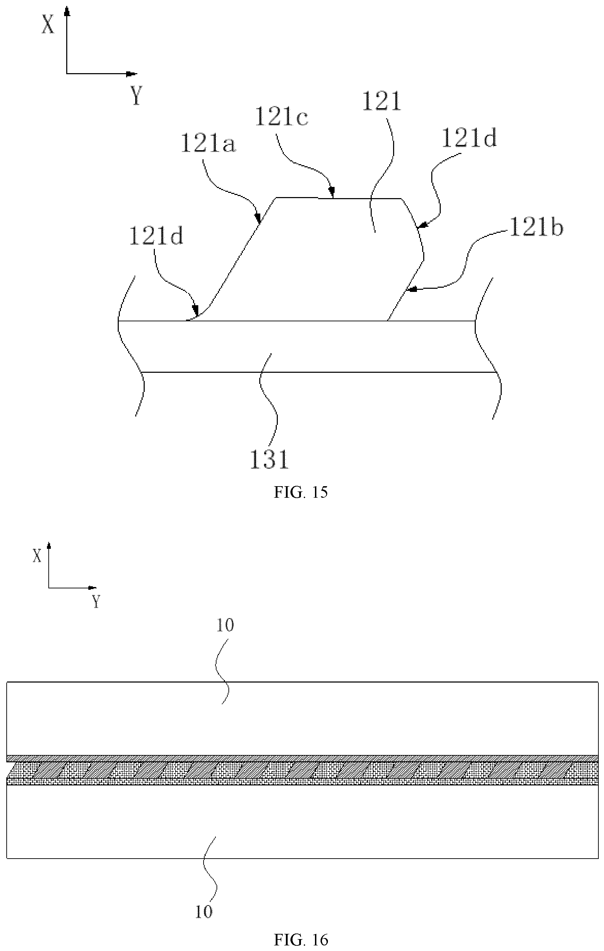

FIG.15 is a schematic structural diagram of the tab region of the electrode plate provided by some other embodiments of the present application.

In some embodiments, the tab portion 121 has a fourth edge 121c on one side away from the coating region 110; and the second edge 121b is connected with the fourth edge 121c through an arc-shaped connecting segment 121d. Alternatively, a chamfer is disposed at a junction of the second edge 121b and the fourth edge 121c.

In some examples of implementations, as shown in FIG. 15, a connection manner between the first edges 121a and the fourth edges 121c may be the same as a connection manner between the second edges 121b and the fourth edges 121c.

In some examples, as shown in FIG. 15, the junction between the first edges 121a and the buffer portion 131 may be connected through the arc-shaped connecting segment 121d. The junction between the second edges 121b and the buffer portion 131 may be connected through the arc-shaped connecting segment. The risk of cracking on one side of the tab portion 121 close to the buffer region 130 during the bending process of the tab portion 121 is further reduced.

In this embodiment, the second edge 121b is connected with the fourth edge 121c through the arc-shaped connecting segment 121d or the chamfer is disposed at the junction of the second edge 121b and the fourth edge 121c, so that the possibility of interference between the junction of the second edge 121b and the fourth edge 121c of the tab portion 121 and the adjacent tab portion 121 after the current collector 100 is bent. The risk of cracking at the corners due to excessive pressure on the corners when the tab portions 121 are bent. The weight of the electrode plate 10 is further reduced.

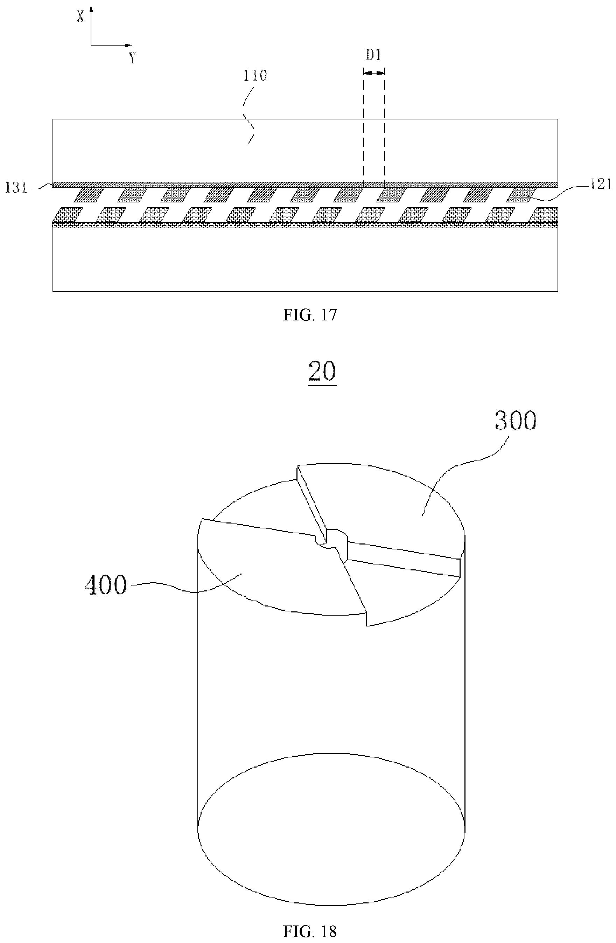

FIG.16 is a schematic structural diagram of an electrode plate not subjected to die-cutting provided by some embodiments of the present application. FIG.17 is a schematic structural diagram of an electrode plate subjected to die-cutting provided by some embodiments of the present application.

In some embodiments, as shown in FIG. 16 to FIG. 17, adjacent tab portions 121 are spaced apart in the second direction Y.

In some examples, spacing distances of part of the tab portions 121 in the tab region 120 in the second direction Yare the same. In some other examples, the spacing distances of part of the tab portions 121 in the tab region 120 in the second direction Y are different. In some examples, the spacing distances of part of the tab portions 121 in the tab region 120 in the second direction Y are correlated with the number of the tab portions 121.

In this embodiment, the weight of the electrode plate 10 is reduced by arranging the tab portions 121 at intervals.

In some embodiments, as shown in FIG. 15 to FIG. 17, each tab portion 121 has a first edge 121a and a second edge 121b which are opposite to each other in the second direction Y, and the first edges 121a are parallel to the second edges 121b. A distance between adjacent tab portions 121 in the second direction Y is the same as the dimension of the tab portion 121 in the second direction Y.

In some examples, the included angle between the first edge 121a and the first direction X is an acute angle. In some other examples, the included angle between the first edge 121a and the first direction X is a right angle.

In the manufacturing process of the current collector 100, a plurality of current collectors 100 are generally die-cut on a whole large blank current collector 100, and a region formed after the die-cutting is usually the tab region 120. In this embodiment, the distance between adjacent tab portions 121 in the second direction Y is the same as the dimension of the tab portion 121 in the second direction Y. Therefore, for the whole blank current collector 100, the die-cut region will become the tab region 120 on the two current collectors 100, thereby reducing the using amount of the current collector 100, reducing the manufacturing cost of the current collector 100, and reducing the weight of the electrode plate 10.

In some embodiments, please refer to FIG. 17, a minimum distance between adjacent tab portions 121 is D1, and D 1 satisfies:0 mm ≤ D1 ≤ 1000 mm.

In this embodiment, the minimum distance between adjacent tab portions 121 may be zero. In other words, the edges of adjacent tab portions 121 abut against each other. The larger the minimum distance 121 between the adjacent tab portions, the smaller the number of the tab portions 121 in the current collector 100, and the lower the efficiency of current that can be transmitted after the tab portions 121 are shaped and electrically connected with other components. The minimum distance D1 between the adjacent tab portions 121 is limited to be 0 mm ≤ D1 ≤ 1000 mm. On the premise of ensuring the overcurrent efficiency of the tab portions 121, the minimum distance between adjacent tab portions 121 is increased as much as possible to reduce the weight of the electrode plate10.

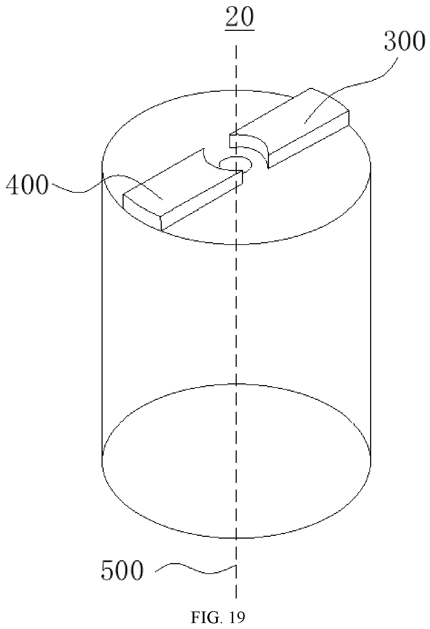

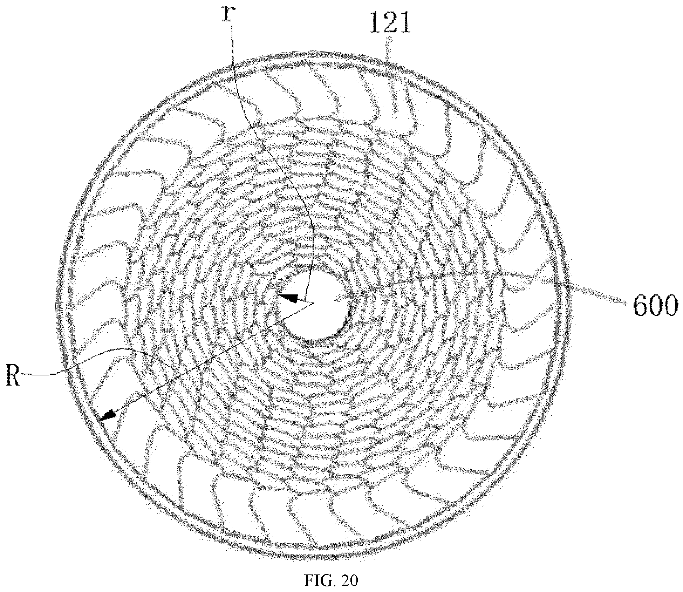

FIG.18 is a schematic structural diagram of an electrode assembly provided by some embodiments of the present application. FIG.19 is a schematic structural diagram of an electrode assembly provided by some other embodiments of the present application. FIG.20 is a schematic diagram of an electrode assembly provided by some embodiments of the present application from another perspective.

In some embodiments, the present application further provides an electrode assembly 12, including a first electrode plate 300 and a second electrode plate 400 which are opposite in polarity, wherein the first electrode plate 300 is the electrode plate 10 as described in any one of the above embodiments.

In some embodiments, as shown in FIG. 18 and FIG. 19, the electrode assembly 12 is of a cylindrical winding structure, and the first electrode plate 300 and the second electrode plate 400 are both the electrode plates 10 as described in any one of the above embodiments. The tab portion 121 of the first electrode plate 300 and the tab portion 121 of the second electrode plate 400 are located at the same end of the electrode assembly 12.

The first electrode plate 300 and the second electrode plate 400 have different polarities. Exemplarily, the first electrode plate 300 has a positive polarity, and the second electrode plate 400 has a negative polarity.

In this embodiment, the tab portion 121 of the first electrode plate 300 and the tab portion 121 of the second electrode plate 400 are located at the same end of the electrode assembly 12, so that the tab portion 121 of the first tab and the tab portion 121 of the second electrode plate 400 can be smoothed at the same time during the winding process or after winding.

In some embodiments, the tab portion 121 of the first electrode plate 300 and the tab portion 121 of the second electrode plate 400 surround a winding shaft 500 of the electrode assembly 12 and are spaced apart in a circumferential direction.

The shapes of the tab portions 121 along an orthographic projection in an axial direction include a sector and a rectangle. The sector and rectangle mentioned in this embodiment are rough outlines rather than precise patterns.

In this embodiment, the tab portions 121 surround the winding shaft 500 of the electrode assembly 12, so that the shaped tabs have no sharp edges and corners, thereby reducing the possibility of the shaped tabs being inserted into the interior of the electrode assembly 12.

In some embodiments, the tab portion 121 of the first electrode plate 300 and the tab portion 121 of the second electrode plate 400 are symmetrically distributed on two sides of the winding shaft 500 of the electrode assembly 12.

In this embodiment, the symmetrical distribution can make the spatial arrangement of the tab portion 121 in the first electrode plate 300 and the tab portion 121 in the second electrode plate 400 more reasonable.

In some implementations, the electrode assembly 12 is of the cylindrical winding structure, a distance between the tab portion 121 in the first electrode plate 300 and a central axis of the electrode assembly 12 is R, and the width of the tab portion 121 is W1; W1 and R in at least part of the tab portion 121 satisfy: W1 ≤ πR.

In some examples of implementations, the distance R between the tab portion 121 of the first electrode plate 300 and the central axis of the cylindrical structure satisfies: 9 mm≤R≤34 mm.

It should be noted that the distance R between the tab portion 121 and the central axis of the electrode assembly 12 refers to a distance between any tab portion 121 and the central axis of the electrode assembly 12.

In this embodiment, the width of the tab portion 121 in the second direction Y is less than or equal to half of a circumference of a position corresponding to the winding structure where the tab portion 121 is located, which facilitates the bending of the tab portion 121 after shaping and reduces the possibility of wrinkles after bending due to excessive curvature of the tab.

In some implementations, as shown in FIG. 17 to FIG. 19, the electrode assembly 12 has a central hole 600 at the winding center, the radius of the central hole 600 is r, and W1 and r in at least part of the tab portion 121 satisfy: W1 ≤ πr.

In some examples of implementations, r satisfies: 1mm≤r≤6mm.

In some examples of implementations, W1 and r satisfy: W1≤1/4*2π*r.

In this embodiment, the width of the tab portions 121 in the second direction Y in a flattened state is less than or equal to half of the circumference of the central hole 600formedafter winding, which is conducive to the bending of the tab portions 121, reduces the possibility of the tab portion 121 close to the central hole 600 being covered by the tab portion 121 far from the central hole 600, and further improves the overcurrent capacity between the tab portions 121 and other components.

In some embodiments, the present application further provides a battery cell 1, including a shell 11 and the plurality of electrode assemblies 12 described in any one of the above embodiments, and the electrode assemblies 12 are arranged in the shell 11.

In some embodiments, the present application further provides a battery 2000, including a plurality of battery cells 1 described in any one of the above embodiments.

In some embodiments, the present application further provides an electrical apparatus, including the battery cell 1 described in any one of the above embodiments, and the battery cell 1 is used to provide electrical energy.

In some embodiments, please refer to FIG. 5 to FIG. 10 together, the present application provides an electrode plate 10. The electrode plate10includes a current collector100and an active material layer 200. The current collector 100 includes a coating region 110, a tab region 120 and a buffer region 130 located between the coating region 110 and the tab region 120, wherein the coating region, the tab region and the buffer region are arranged side by side in a first direction X, the current collector 100 includes a plurality of tab portions 121 arranged side by side in a second direction Y in the tab region 120, and the first direction X intersects the second direction Y; the coating region 110 is coated with the active material layer 200; wherein the current collector 100 includes a buffer portion 131 in the buffer region 130, the buffer portion 131 extends in the second direction Y and is connected with the plurality of tab portions 121, and the buffer portion 131 is configured to absorb bending stress of the plurality of tab portions 121.

Referring to FIG. 5 to FIG. 8, a dimension of each tab portion 121 in the first direction X is H1, a dimension of the buffer portion 131 in the first direction X is H2, and H1 and H2 satisfy: H1≥H2. A dimension of each tab portion 121 in the second direction Y is W1, a dimension of each tab portion 121 in the first direction X is H1, and H1 and W1 satisfy: 3W1≥H1≥0.5W1. Any tab portion 121 does not exceed the coating region 110 in the second direction Y. First edges 121a and second edges 121b in at least part of the tab portions 121 are arranged to be inclined relative to the first direction X. Referring to FIG. 18 to FIG. 20, an electrode assembly 12 is of a cylindrical winding structure, a distance between a tab portion 121 in a first electrode plate 300 and a central axis of the electrode assembly 12 is R, and the width of the tab portion 121 is W1; W1 and R in at least part of the tab portion 121 satisfy: W1≤πR. the radius of a central hole 600 is r, and W1 and r in at least part of the tab portions 121 satisfy: W1≤πr.

It should be noted that, without conflict, embodiments in the present application and features in the embodiments may be combined together.

Finally, it should be noted that, the above embodiments are merely used for describing the technical solution of the present application, instead of limiting the present application; although the present application is described in detail with reference to the foregoing embodiments, persons of ordinary skill in the art should understand that they can still make modifications on the technical solutions recorded in the above embodiments, or perform equivalent replacements on a part of technical features thereof; these modifications or replacements are not intended to make the essences of the corresponding technical solutions depart from the spirit and scope of the technical solutions of the embodiments of the present application.

## Claims

1. An electrode plate, comprising:
a current collector, comprising a coating region, a tab region and a buffer region located between the coating region and the tab region, wherein the coating region, the tab region and the buffer region are arranged side by side in a first direction, the current collector comprises a plurality of tab portions arranged side by side in a second direction in the tab region, and the first direction intersects the second direction; and
an active material layer, wherein the coating region is coated with the active material layer;
wherein the current collector comprises a buffer portion in the buffer region, the buffer portion extends in the second direction and is connected with the plurality of tab portions, and the buffer portion is constructed to absorb bending stress of the plurality of tab portions.

2. The electrode plate according to claim 1, wherein a dimension of each tab portion in the first direction is H1, a dimension of the buffer portion in the first direction is H2, and H1 and H2 satisfy: H1≥H2.

3. The electrode plate according to claim 1 or 2, wherein a dimension of each tab portion in the second direction is W1, a dimension of each tab portion in the first direction is H1, and H1 and W1 satisfy: 3W1≥H1≥0.5W1.

4. The electrode plate according to any one of claims 1-3, wherein each tab portion has a first edge and a second edge which are opposite to each other in the second direction, and the first edges in at least part of the tab portions are arranged to be inclined relative to the first direction.

5. The electrode plate according to claim 4, wherein a first ray parallel to the first direction is formed in a direction from the tab region to the coating region, the first ray takes one end of the first edge away from the tab region as an endpoint, an included angle between the first edge and the first ray is α1, and α1 satisfies -75° ≤α1≤75°;
wherein assuming that the first edge is located within a 180° clockwise rotation range of the first ray, the included angle α1 between the first edge and the first ray is a positive included angle; and assuming that the first edge is located within a 180° counterclockwise rotation range of the first ray, the included angle α1 between the first edge and the first ray is a negative included angle.

6. The electrode plate according to claim 4, wherein the second edges in at least part of the tab portions are arranged to be inclined relative to the first direction.

7. The electrode plate according to claim 6, wherein a first ray parallel to the first direction is formed in a direction from the tab region to the coating region, the first ray takes one end of the first edge away from the coating region as an endpoint, and an included angle between the first edge and the first ray is α1;
a second ray parallel to the first direction is formed in the direction from the tab region to the coating region, the second ray takes one end of the second edge away from the coating region as an endpoint, an included angle between the second edge and the second ray is α2, and α1 and α2 satisfy: α1+α2=0°.

8. The electrode plate according to claim 6, wherein a first ray parallel to the first direction is formed in a direction from the tab region to the coating region, the first ray takes one end of the first edge away from the coating region as an endpoint, and an included angle between the first edge and the first ray is α1;
a second ray parallel to the first direction is formed in the direction from the tab region to the coating region, the second ray takes one end of the second edge away from the coating region as an endpoint, an included angle between the second edge and the second ray is α2, and at least part of α1 and α2 satisfy: α1/α2 > 0.

9. The electrode plate according to claim 8, wherein any tab portion does not exceed the coating region in the second direction.

10. The electrode plate according to claim 9, wherein the whole formed by the plurality of tab portions has a first tab portion at one end in the second direction, the coating region has a third edge on one side close to the first tab portion in the second direction, and the third edge is spaced apart from the first tab portion in the second direction.

11. The electrode plate according to claim 9, wherein the whole formed by the plurality of tab portions has a first tab portion at one end in the second direction, the coating region has a third edge on one side close to the first tab portion in the second direction, and in the first tab portion, the second edge is located on one side of the first tab portion close to the third edge;
wherein in a direction away from the coating region, the second edge is arranged to be inclined relative to the first direction.

12. The electrode plate according to claim 8, wherein in at least part of the tab portions, the first edges are parallel to the second edges.

13. The electrode plate according to claim 4, wherein the tab portion has a fourth edge on one side away from the coating region;
the second edge is connected with the fourth edge via an arc-shaped connecting segment; or
a chamfer is arranged at a junction of the second edge and the fourth edge.

14. The electrode plate according to any one of claims 1-13, wherein adjacent tab portions are spaced apart in the second direction.

15. The electrode plate according to claim 14, wherein each tab portion has a first edge and a second edge which are opposite to each other in the second direction, and the first edge is parallel to the second edge; and
a distance between adjacent tab portions in the second direction is the same as the dimension of the tab portion in the second direction.

16. The electrode plate according to any one of claims 1-15, wherein a minimum distance between adjacent tab portions is D1, and D1satisfies: 0 mm≤D1≤1000 mm.

17. The electrode plate according to any one of claims 1-16, wherein
the structural strength of the buffer portion is not less than the structural strength of other positions in the tab region; and/or
the thickness of the buffer portion is greater than the thickness of other parts in the tab region; and/or
the hardness of the buffer portion is greater than the hardness of other parts in the tab region.

18. The electrode plate according to claim 17, further comprising a buffer layer, wherein the buffer layer is an inactive material layer coated on the buffer portion.

19. An electrode assembly, comprising a first electrode plate and a second electrode plate which are opposite in polarity, wherein the first electrode plate is the electrode plate according to any one of claims 1-18.

20. The electrode assembly according to claim 19, wherein the electrode assembly is of a cylindrical winding structure, and the first electrode plate and the second electrode plate are both electrode plates according to any one of claims 1 to 19; and
a tab portion of the first electrode plate and a tab portion of the second electrode plate are located at the same end of the electrode assembly.

21. The electrode assembly according to claim 20, wherein the tab portion of the first electrode plate and the tab portion of the second electrode plate surround a winding shaft of the electrode assembly and are spaced apart in a circumferential direction.

22. The electrode assembly according to claim 21, wherein the tab portion of the first electrode plate and the tab portion of the second electrode plate are symmetrically distributed on two sides of the winding shaft of the electrode assembly.

23. The electrode assembly according to any one of claims 19-22, wherein the electrode assembly is of a cylindrical winding structure, a distance between the tab portion in the first electrode plate and a central axis of the electrode assembly is R, and the width of the tab portion is W1; and
W1 and R in at least part of the tab portions satisfy: W1≤πR.

24. The electrode assembly according to claim 23, wherein the electrode assembly has a central hole at the winding center, the radius of the central hole is r, and W1 and r in at least part of the tab portions satisfy: W1≤πr.

25. A battery cell, comprising a shell and the electrode assembly according to any one of claims 19-24, wherein the electrode assembly is arranged in the shell.

26. A battery, comprising a plurality of battery cells according to claim 25.

27. An electrical apparatus, comprising the battery cell according to claim 25, the battery cell being used to provide electrical energy.
